Europäisches Patentamt

European Patent Office

Office européen des brevets

(11) Numéro de publication : **0 449 676 A1**

# (12) DEMANDE DE BREVET EUROPEEN

(21) Numéro de dépôt : **91400502.0**

(22) Date de dépôt : **25.02.91**

(51) Int. Cl.$^5$ : **B65D 85/72, A47G 23/06**

(30) Priorité : 26.02.90 FR 9002342

(43) Date de publication de la demande :
02.10.91 Bulletin 91/40

(84) Etats contractants désignés :
DE FR GB IT

(71) Demandeur : Hess, Jack L. C. J. M.
10, rue Daubigny
F-75 017 Paris (FR)

(72) Inventeur : Hess, Jack L. C. J. M.
10, rue Daubigny
F-75 017 Paris (FR)

(74) Mandataire : Bourgognon, Jean-Marie et al
Cabinet Flechner 22, Avenue de Friedland
F-75008 Paris (FR)

(54) Boîte de présentation de mets.

(57)   Une boîte de présentation de mets est constituée d'un plateau ayant un fond (1) et une face latérale (2) issue de tout le pourtour du fond et d'un ensemble de plats (3 à 6) en un matériau alimentaire et reposant sur le fond (1). La boîte est fermée par un couvercle (7) opaque, rigide, et plan. Présentation de mets aux voyageurs.

EP 0 449 676 A1

FIG_1

## BOITE DE PRESENTATION DE METS

La présente invention est relative aux plateaux de présentation de mets utilisés, notamment, dans les véhicules de transport en commun tels que les avions, pour offrir des repas aux voyageurs.

On connaît déjà un plateau ayant un fond, muni d'un rebord. Un ensemble de plats, en un matériau pouvant venir en contact avec des denrées, repose sur le fond. Par l'expression "pouvant venir en contact avec des denrées", on entend dans le présent mémoire un matériau dit "alimentaire" qu'il est possible, suivant les prescriptions légales, de mettre en contact avec des denrées. Les plats sont maintenus sur le fond du plateau par des moyens d'immobilisation qui sont constitués d'une pellicule de matière plastique rétractée sur le plateau et sur les plats. Pour avoir accès au plat, l'utilisateur déchire la pellicule. L'inconvénient de ce plateau est que l'utilisateur conserve sous les yeux les reliefs d'un plat avant de manger le suivant, tant que l'ensemble du plateau n'a pas été desservi.

Au modèle d'utilité allemand 6 915 827, on décrit un plateau à fond alvéolé dans l'un des alvéoles duquel est placée une pièce rapportée sans fond qui subdivise cet alvéole. Ce plateau a obligatoirement grande hauteur. Il ne comporte pas de plat et ne peut pas en recevoir car un plat introduit dans un alvéole ne pourrait en être retiré que très difficilement. Il est muni d'un couvercle dont on ne précise pas s'il est rigide et opaque ni si sa face extérieure est plane.

L'invention pallie cet inconvénient par une boîte de présentation de mets, constituée d'un plateau ayant un fond sensiblement plan et rigide et une face latérale rigide issue du pourtour du fond, d'un ensemble de plats en un matériau pouvant venir en contact avec des denrées et reposant sur le fond, de moyens d'immobilisation principaux destinés à empêcher les plats de se déplacer sur le fond et de moyens d'immobilisation temporaires qui sont distincts du fond et qui sont destinés à empêcher les plats de se soulever d'eux-mêmes du fond, caractérisée en ce que la boîte est fermée par un couvercle opaque, rigide et dont sensiblement toute la surface supérieure est plane.

Désormais, pour prendre un plat, l'utilisateur met fin à l'action des moyens d'immobilisation temporaires, soulève un plat et le place sur la surface supérieure opaque et rigide du couvercle. Lorsqu'il consomme ce plat, il ne voit pas ceux qui sont dans la boîte et qui sont dissimulés par le couvercle opaque. Lorsqu'il a terminé ce plat, il le replace dans la boîte, en-dessous du couvercle. Il garde toujours sous les yeux, soit la surface supérieure parfaitement propre et en tout cas sans aucun relief de repas du couvercle, soit un plat nouveau et appétissant qu'il va manger.

De préférence, la face latérale du plateau est également opaque, de sorte que les plats consommés et ramenés dans la boîte ne puissent être vus par le côté. Suivant un mode de réalisation avantageux, la face inférieure du couvercle s'applique sur les plats et le couvercle est en un matériau pouvant venir en contact avec des denrées. On peut ainsi donner à la boîte une épaisseur relativement faible, sensiblement égale à la somme des épaisseurs du fond, d'un plat et du couvercle. De plus, c'est le couvercle lui-même qui, par sa face inférieure, immobilise temporairement les plats perpendiculairement au fond.

Suivant une autre variante, les moyens d'immobilisation tant principaux que temporaires, donc tant parallèlement que perpendiculairement au fond, sont constitués d'une même pellicule de matière plastique rétractée sur le plateau et sur les plats. Cette variante présente l'avantage que le contenu des plats ne peut pas venir en contact avec la face inférieure du couvercle et la maculer. On obtient également cet avantage quand les moyens d'immobilisation des plats, principaux et surtout temporaires, comprennent des éléments en saillie de la face inférieure du couvercle et en contact avec les bords des plats.

Suivant une variante, les moyens d'immobilisation principaux des plats comprennent des bords en contact l'un avec l'autre de deux plats voisins. C'est ainsi la configuration générale de l'ensemble des plats qui assure d'elle-même la propre immobilisation de ceux-ci. Pour faciliter la préhension des plats, il est prévu des moyens permettant de les appréhender et, après avoir mis fin à l'action des moyens d'immobilisation temporaires perpendiculairement au fond, de les soulever. Ces moyens de préhension des plats peuvent comprendre un rebord d'un plat qui est parallèle au fond et que l'utilisateur peut donc saisir en passant la main à l'intérieur du plat. Mais, de préférence, les moyens de préhension sont constitués par le fait que des seconds bords, adjacents aux premiers bords en contact l'un avec l'autre de deux plats voisins, ne sont pas en contact avec un autre plat. La configuration en mosaïque des plats ménage donc des espaces libres dans lesquels l'utilisateur peut passer la main et soulever un plat.

Bien que le couvercle puisse être fixé de diverses façons au plateau, et notamment coulisser comme dans une boîte d'allumettes, on préfère de beaucoup que le couvercle se rabatte par une charnière, notamment souple. On préfère prévoir un couvercle à deux abattants montés sur leur charnière respective.

Au dessin annexé, donné uniquement à titre d'exemple :

la figure 1 est une vue en perspective d'une boîte suivant l'invention, et

les figures 2 et 3 sont des vues en coupe de deux variantes.

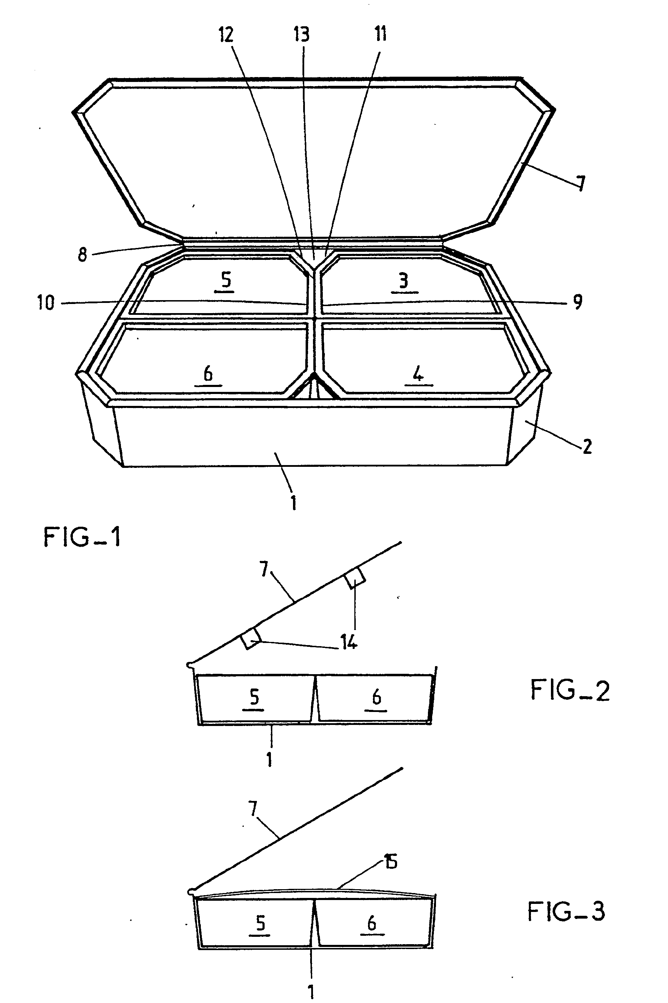

La boîte de préparation de mets, représentée à la figure 1, est constituée d'un plateau ayant un fond 1 et une face latérale 2 issue de tout le pourtour du fond. Quatre plats 3 à 6 en un matériau alimentaire reposent sur le fond 1. Un couvercle 7, opaque, rigide et dont sensiblement toute la surface supérieure est plane, est articulé par une charnière souple 8 à un bord supérieur de la face latérale 2 du plateau.

Lorsque le couvercle 7 est rabattu sur le plateau, il s'applique par sa face inférieure sur les bords des plats 3 à 6. Le couvercle est en un matériau alimentaire.

Le plat 3 et le plat 5 ont, respectivement, des bords 9 et 10 en contact l'un avec l'autre. Ces bords affectent d'ailleurs la forme d'un rebord. Des seconds bords, 11 et 12, adjacents respectivement aux premiers bords 9 et 10 des plats 3 et 5, ne sont pas en contact avec un autre plat. Ils délimitent une ouverture 13 par laquelle l'utilisateur peut passer le doigt et soulever le plat 3 ou le plat 5.

A la figure 2, des pattes 14, issues de la surface inférieure du couvercle 7, s'appliquent sur les bords des plats et les immobilisent perpendiculairement au fond 1 quand le couvercle 7 est rabattu sur le plateau. Ces pattes 14 peuvent également servir à bloquer entre elles des fourchettes ou des couteaux.

A la figure 3, les moyens d'immobilisation des plats, tant parallèlement que perpendiculairement au fond dans le plateau, sont constitués par une pellicule en matière plastique 15 thermorétractée, les plats étant également maintenus par le fait que leurs côtés voisins de la face latérale 2 s'y emboîtent exactement.

On utilise ces boîtes de la manière suivante. On soulève le couvercle 7, on en sort un plat 5, on referme le couvercle 7, on pose le plat 5 sur la surface supérieure du couvercle 7. On consomme ce plat. On soulève le couvercle 7. On remet ce plat 5 dans le plateau. On referme le couvercle 7.

## Revendications

1. Boîte de présentation de mets, constituée d'un plateau ayant un fond (1) sensiblement plan et rigide et une face latérale (2) rigide issue du pourtour du fond (1), d'un ensemble de plats (3 à 6) en un matériau pouvant venir en contact avec des denrées et reposant sur le fond (1) de moyens d'immobilisation principaux destinés à empêcher les plats de se déplacer sur le fond et des moyens d'immobilisation temporaires destinés à empêcher les plats de se soulever d'eux-mêmes du fond (1), caractérisée en ce que la boîte est fermée par un couvercle (7) opaque, rigide et dont sensiblement toute la surface supérieure est plane.

2. Boîte suivant la revendication 1, caractérisée en ce que la face latérale (2) est opaque.

3. Boîte suivant la revendication 1 ou 2, caractérisée en ce que la face inférieure du couvercle (7) s'applique sur les plats (3 à 6) et le couvercle (7) est en un matériau pouvant venir en contact avec des denrées.

4. Boîte suivant la revendication 1, 2 ou 3, caractérisée en ce que les moyens d'immobilisation principaux et temporaires des plats sont constitués d'une même pellicule (15) de matière plastique rétractée sur le plateau et sur les plats.

5. Boîte suivant l'une des revendications 1, 2 ou 4, caractérisée en ce que les moyens d'immobilisation principaux et temporaires des plats comprennent des éléments (14) en saillie de la face inférieure du couvercle (7) et en contact avec les bords des plats (3 à 6).

6. Boîte suivant l'une des revendications 1 à 5, caractérisée en ce que les moyens d'immobilisation principaux des plats comprennent des bords (9, 10) en contact l'un avec l'autre de deux plats (3, 5) voisins.

7. Boîte suivant l'une des revendications 1 à 6, caractérisée par des moyens (13) permettant d'appréhender les plats et, après avoir mis fin à l'action des moyens d'immobilisation temporaires, de les soulever.

8. Boîte suivant la revendication 7, caractérisée en ce que les moyens de préhension des plats comprennent un rebord d'un plat, qui est parallèle au fond.

9. Boîte suivant les revendications 6 et 7 ou 8 prises ensemble, caractérisée en ce que les moyens de préhension sont constitués par le fait que les seconds bords (11, 12), adjacents aux premiers bords (9, 10) en contact l'un avec l'autre de deux plats (3, 5) voisins, ne sont pas en contact avec un autre plat.

10. Boîte suivant l'une des revendications précédentes, caractérisée en ce que le couvercle se rabat par une charnière (8).

FIG_1

FIG_2

FIG_3

EP 0 449 676 A1

Office européen
des brevets

**RAPPORT DE RECHERCHE EUROPEENNE**

Numero de la demande

EP  91 40 0502

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | DE-U-6 915 827 (INTERNATIONALE APFELFAHRTEN-ORGANISATION) <br> * revendication 4; page 5, lignes 1-5; figure 1 * <br> --- | 1-3 | B 65 D   85/72 <br> A 47 G   23/06 |
| A | FR-A-2 625 182 (I. RITTNER) <br> * abrégé; figure 1 * <br> --- | 1,10 | |
| A | FR-A-2 360 473 (DART INDUSTRIES) <br> * revendication 1; figures 3,4 * <br> --- | 1,7-9 | |
| A | DE-U-8 706 625 (R. PIEPER) <br> * figures 1,2,5 * <br> ----- | 1 | |
| | | | **DOMAINES TECHNIQUES RECHERCHES (Int. Cl.5)** |
| | | | A 47 G <br> B 65 D |
| | Le présent rapport a été établi pour toutes les revendications | | |

| Lieu de la recherche | Date d'achèvement de la recherche | Examinateur |
|---|---|---|
| BERLIN | 05-06-1991 | WESTERMAYER W G |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................
& : membre de la même famille, document correspondant

EPO FORM 1503 03.82 (P0402)

6